# EUROPÄISCHE PATENTSCHRIFT

(11) **EP 3 971 611 B1**
(45) Veröffentlichungstag und Bekanntmachung des Hinweises auf die Patenterteilung: **19.08.2026**
(21) Anmeldenummer: 20196729.6
(22) Anmeldetag: 17.09.2020
(51) Int. Cl.: G01S 13/88, G01S 7/03, H01Q 19/06, H01Q 21/06, G01S 7/02

(54) **RADARMESSGERÄT**
RADAR MEASURING DEVICE
APPAREIL DE MESURE RADAR

(43) Veröffentlichungstag der Anmeldung: 23.03.2022
(73) Patentinhaber: VEGA Grieshaber KG, 77709 Wolfach (DE)
(72) Erfinder: Wälde, Steffen, 78078 Niedereschach (DE); Weinzierle, Christian, 77709 Wolfach (DE)
(74) Vertreter: Patentanwälte Bauer Vorberg Kayser

(56) Entgegenhaltungen:
- EP-A1- 3 693 711
- EP-A1- 3 696 516
- DE-A1- 102016 217 614

## Beschreibung

Die vorliegende Erfindung betrifft ein Radarmessgerät gemäß dem Oberbegriff des Patentanspruchs 1.

Aus dem Stand der Technik sind verschiedene Radarmessanordnungen, Radarmessgeräte und -verfahren bekannt. Bspw. werden Radarmessanordnungen und Radarmessgeräte im Stand der Technik in der Prozessautomatisierung zur Füllstandmessung oder allgemeiner zur Abstandsmessung eingesetzt. Um auch bewegte Objekte erkennen zu können, wird im Stand der Technik neben einer Abstandsbestimmung in einer separaten Messung auch eine Geschwindigkeitsbestimmung durchgeführt. Dies kann entweder mit dem gleichen Radarsensor, oder mit einem zusätzlichen Radarsensor erfolgen. Entsprechende Radargeräte sind beispielsweise in EP3696516, EP3693711 oder DE102016217614 beschrieben.

Aufgrund weitreichender Unabhängigkeit gegenüber äußeren Einflüssen und durch die Erschließung höherer Arbeitsfrequenzen mit Hilfe neuartiger Halbleiterbauelemente können mit modernen Radarmessgeräten sehr exakte Messergebnisse zuverlässig ermittelt werden. Bekannte Radarfüllstandmessgeräte messen den Abstand zu einem Füllgut und anderen Reflexionsstellen, nachfolgend auch Reflektoren genannt, innerhalb eines Behälters durch Anwendung eines Puls-Laufzeit-Verfahrens oder eines FMCW-Verfahrens (FMCW = Frequency Modulated Continous Wave).

Bei Anwendungen im Bereich der Automatisierungstechnik werden bislang hauptsächlich optische Verfahren und Messanordnungen verwendet.

Unter dem Begriff Automatisierungstechnik wird ein Teilgebiet der Technik verstanden, welches alle Maßnahmen zum Betrieb von Maschinen und Anlagen ohne Mitwirkung des Menschen beinhaltet, so kann das Teilgebiet der Prozessautomatisierung als niedrigster Grad der Automatisierung verstanden werden. Ziel der Prozessautomatisierung ist es, das Zusammenspiel einzelner Komponenten einer Werksanlage in den Bereichen Chemie, Erdöl, Papier, Zement, Schifffahrt oder Bergbau zu automatisieren. Hierzu sind eine Vielzahl an Sensoren bekannt, welche insbesondere an die spezifischen Anforderungen der Prozessindustrie, wie bspw. mechanische Stabilität, Unempfindlichkeit gegenüber Verschmutzung, extremen Temperaturen und extremen Drücken, angepasst sind. Messwerte dieser Sensoren werden üblicherweise an eine Leitwarte übermittelt, in welcher Prozessparameter wie Füllstand, Durchfluss, Druck oder Dichte überwacht und Einstellungen für die gesamte Werksanlage manuell oder automatisiert verändert werden können.

Ein anderes Teilgebiet der Automatisierungstechnik betrifft die Logistikautomation. Mit Hilfe von Distanz- und Winkelsensoren werden im Bereich der Logistikautomation Abläufe innerhalb eines Gebäudes oder innerhalb einer einzelnen Logistikanlage automatisiert. Typische Anwendungen finden Systeme zur Logistikautomation im Bereich der Gepäck- und Frachtabfertigung an Flughäfen, im Bereich der Verkehrsüberwachung (Mautsysteme), im Handel, der Paketdistribution oder aber auch im Bereich der Gebäudesicherung (Zutrittskontrolle). Gemein ist den zuvor aufgezählten Beispielen, dass eine Präsenzerkennung in Kombination mit einer genauen Vermessung der Größe und der Lage eines Objektes von der jeweiligen Anwendungsseite gefordert wird. Bekannte Radarsysteme sind bislang nicht in der Lage, die Anforderungen hierbei zu erfüllen, weshalb im bekannten Stand der Technik unterschiedliche Sensoren auf Basis optischer Messverfahren mittels Laser, LED, 2D-Kameras oder 3D-Kameras, die nach dem Laufzeitprinzip (time off light, ToF) Abstände erfassen, verwendet werden.

Ein drittes Teilgebiet der Automatisierungstechnik betrifft die Fabrikautomation. Anwendungsfälle hierzu finden sich in den unterschiedlichsten Branchen wie Automobilherstellung, Nahrungsmittelherstellung, Pharmaindustrie oder allgemein im Bereich der Verpackung. Ziel der Fabrikautomation ist, die Herstellung von Gütern durch Maschinen, Fertigungslinien und/oder Roboter zu automatisieren, d. h. ohne Mitwirkung des Menschen ablaufen zu lassen. Die hierbei verwendeten Sensoren und spezifischen Anforderungen im Hinblick auf die Messgenauigkeit bei der Erfassung der Lage und Größe eines Objektes sind mit denen der im vorigen Beispiel der Logistikautomation vergleichbar. Üblicherweise werden daher auch im Bereich der Fabrikautomation im großen Stil Sensoren auf Basis optischer Messverfahren eingesetzt.

Sowohl im Bereich der Logistikautomation, als auch im Bereich der Fabrikautomation und der Sicherheitstechnik dominieren bislang optische Sensoren. Diese sind schnell und preisgünstig und können die Lage und/oder den Abstand zu einem Objekt aufgrund der relativ einfach fokussierbaren optischen Strahlung, welche der Messung zu Grunde liegt, zuverlässig ermitteln. Ein bedeutender Nachteil optischer Sensoren ist aber deren erhöhter Wartungsbedarf, da auch in den zuvor aufgezählten Bereichen nach einigen tausend Betriebsstunden ein Verschmutzen des Sensors zu beobachten ist, welche die Messung massiv beeinträchtigt. Zudem kann speziell beim Einsatz in Fertigungslinien die Messung durch Öldämpfe oder andere Aerosole mit Nebelbildung beeinträchtigt werden, und zu einer zusätzlichen Verschmutzung optischer Sensoren führen.

In der Prozessindustrie und insbesondere in der Prozessautomatisierung werden Radarmessgeräte und insbesondere Radarfüllstandmessgeräte unter rauen Bedingungen, wie hohe und tiefe Temperaturen sowie unter extremen Drücken, in staubigen Umgebungen und aggressiven Medien zuverlässig eingesetzt.

Zunächst etablierten sich Radarmessgeräte im C-Band auf dem Markt, die im Frequenzbereich um 6 GHz arbeiten und laut Regulierungsbehörden zugelassen werden dürfen. Diese Geräte haben den Nachteil einer großen Bauform, da die Antennengröße abhängig von der verwendeten Wellenlänge ist. Es wurden daher Radarmessgeräte im K-Band entwickelt. Das K-Band bezeichnet den Frequenzbereich um 25 GHz. Die dadurch erzielbaren Antennengrößen sind gegenüber den für das C-Band notwendigen Antennen deutlich reduziert. Seit 2016 sind erste Radarmessgeräte, und vorliegend insbesondere ein Radarfüllstandmessgerät für Flüssigkeiten, verfügbar, die im W-Band, also dem Frequenzbereich um 80 GHz, arbeiten. Auf diese Weise können sehr kompakte Antennenbauformen realisiert werden, die auch kleine Prozessanschlüsse zur Anordnung der Radarmessgeräte in einer Prozessumgebung erlauben.

Die Funkzulassungen für die o. g. Geräte müssen weltweit erfolgen. Es gibt dafür Vorgaben der verschiedenen Regulierungsbehörden, die jeweils regional festlegen, unter welchen Bedingungen ein Radarmessgerät im jeweiligen Land zugelassen und verkauft werden darf. So gibt es beispielsweise in Europa und den USA Regulierungen, nach denen Füllstandradargeräte, die im C-Band, K-Band, W-Band und im V-Band arbeiten, zulässig sind. V-Band Radargeräte arbeiten in einem Frequenzbereich um 60 GHz.

Bei der Zulassung dieser Radarmessgeräte spielt nicht nur der verwendete Frequenzbereich eine Rolle, sondern auch weitere Eigenschaften der Radarmessgeräte, wie beispielsweise die abgestrahlte Hochfrequenz-Leistung, die Orientierung des Radargeräts oder die Abstrahleigenschaften der Antenne. Ferner wird unterschieden ob ein Gerät in einem geschlossenen Behälter oder im Freifeld eingesetzt wird.

Die Anforderungen an ein W-Band-Radarmessgerät, das im Freifeld zugelassen wird sind bspw. so, dass die Antenne einen Öffnungswinkel von ≤8° aufweisen und senkrecht nach unten montiert werden muss. Ebenfalls müssen die Nebenkeulen im Bereich ≥60° im Verhältnis zur Hauptkeule, d. h. der Abstrahlcharakteristik in Hauptabstrahlrichtung der Antenne, um 38dB bedämpft sein.

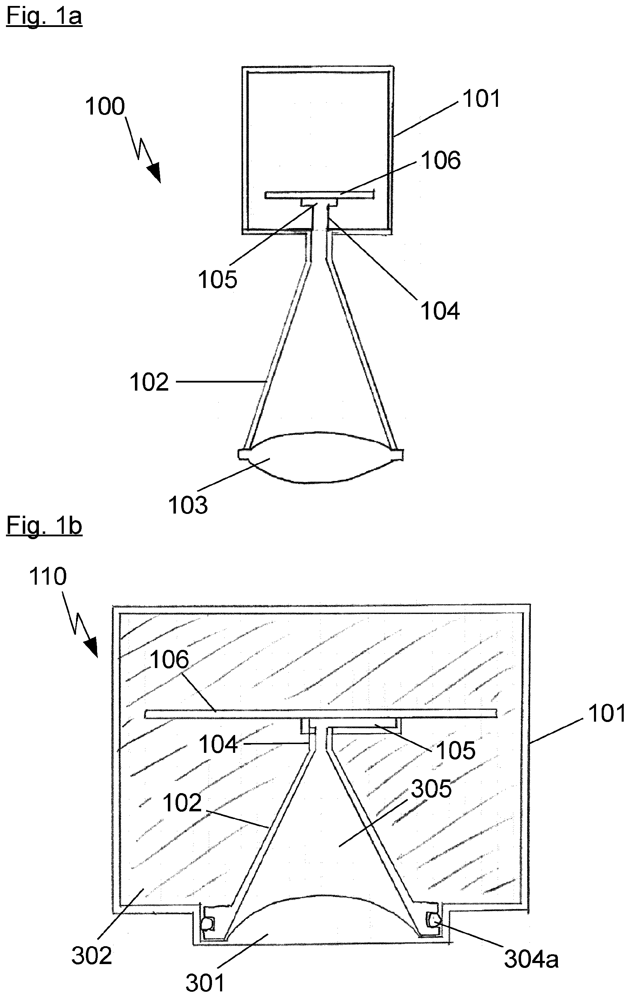

Ein aus dem Stand der Technik bekanntes Radarmessgerät 100, hier ein Radarfüllstandmessgerät ist in Figur 1a dargestellt.

Das in Figur 1a gezeigte Radarfüllstandmessgerät 100 weist im Wesentlichen ein Gehäuse 101, eine in dem Gehäuse 101 angeordnete Leiterplatte 106 mit einer auf der Leiterplatte 106 angeordneten Hochfrequenzeinheit (HF-Einheit) 105 mit einem Radarchip. Die Hochfrequenzeinheit 105 enthält bspw. Sender und Empfänger für Hochfrequenzsignale im gewünschten Band.

Gemäß der vorliegenden Anmeldung wird unter einer Hochfrequenzeinheit der Teil eines Radarmessgeräts verstanden, der Hochfrequenzsignale erzeugt, sendet und empfängt.

Bei dem in Figur 1a gezeigten Radarfüllstandmessgerät 100 ist die HF-Einheit 105 mit einer Hornantenne 102 gekoppelt, an deren in Hauptabstrahlrichtung H vorderen Ende eine dielektrische Linse 103 angeordnet ist. Eine Länge der Hornantenne 102 ist maßgeblich für die Abstrahleigenschaften der Hornantenne 102 verantwortlich und muss über Berechnungen und Simulationen so ausgelegt werden, dass sämtliche relevanten Zulassungsaspekte erfüllt werden. Insbesondere sind hier der durch die Zulassungen definierte Öffnungswinkel und die vorgeschriebene Nebenkeulenunterdrückung zu nennen. Die Linse 103 sitzt dabei vorderseitig in der Hornantenne 102 und ist so ausgestaltet, dass die geometrische Länge der Antenne im Vergleich zu einer Hornantenne ohne Linse verkürzt ist. Im vorliegenden Ausführungsbeispiel ist eine konvex-konvexe oder bikonvexe Linse 103, d. h. eine Linse mit zwei nach außen gewölbten Flächen gezeigt. Auf diese Weise kann eine kompakte Bauform realisiert werden.

In Figur 1b ist eine weitere Ausgestaltung eines Radarfüllstandmessgeräts 100 gemäß dem Stand der Technik gezeigt, wobei im Vergleich zu der Ausgestaltung der Figur 1a eine plan-konvexe Linse 301 eingesetzt wird.

Die Linsen 103, 301 bieten neben einer kompakteren Antennenbauform zudem den Vorteil, dass diese als Trennung zum Prozess und zum Prozessmedium fungieren. Die auf der Leiterplatte 106 angeordnete Messelektronik und insbesondere die HF-Einheit 105 kann durch die Linse 103, 301 vor hohen und tiefen Drücken und Temperaturen, Staub, Feuchtigkeit, und anderen für die Messelektronik negativen Umgebungsbedingungen geschützt werden.

Die Linsen 103, 301 sind dabei häufig so ausgestaltet, dass sie neben guten Hochfrequenzeigenschaften weitere Eigenschaften aufweisen. Zu nennen sind hierbei beispielsweise Abtropfkegel oder Abtropfkanten, die so ausgestaltet sind, dass sich an der Linse 103, 301 abscheidendes Kondensat in vorteilhafter Weise schnell abtropfen kann oder seitlich an der Antenne befindliches Regenwasser nicht direkt vor die Linse läuft.

Es ist möglich, dass sich die Hornantenne 102 außerhalb des Gerätegehäuses 101 befindet (siehe Figur 1a) oder auch innerhalb (siehe Figur 1b).

Ein weiterer Aspekt, der speziell radarbasierte Füllstandmessgeräte in der Prozessindustrie betrifft, ist der Explosionsschutz.

In industriellen Anlagen können häufig Gase oder Stäube in einer Konzentration auftreten, die durch elektrische Geräte gezündet werden können und dann zu einer Explosion führen. Aus diesem Grund werden Geräte so entwickelt und gebaut, dass eine solche Zündung nicht auftreten kann oder eine Zündung nur innerhalb des Gehäuses auftreten kann und diese dann aber wiederum keine Auswirkungen auf die Umgebung hat. Die Geräte werden dann in sogenannte Zündschutzklassen eingeteilt, je nachdem, welche Anforderungen sie an den Explosionsschutz erfüllen.

Eine Möglichkeit, das Risiko einer Zündung innerhalb des Radarfüllstandmessgeräts 100 zu vermeiden, ist in Figur 1b dargestellt. Hierfür wird das Gerätegehäuse 101 und die sich darin befindliche Elektronik mit einer Vergussmasse 302 vergossen. Auf dieser Weise wird erreicht, dass alle möglichen Hohlräume innerhalb des Gerätegehäuses 101, in denen sich explosive Gasgemische sammeln könnten, mit der Vergussmasse 302 ausgefüllt sind. Damit kann sich kein explosives Gas ansammeln. Die Basis einer solchen Vergussmasse 302 kann beispielsweise Silikon sein. Sie sollte außerdem nicht leitfähig sein und nach dem Vergießen zu einem gewissen Grad aushärten.

Eine weitere Möglichkeit eine Zündung zu vermeiden, ist es, die Leistung im Bereich eines Hohlraums durch entsprechende Beschaltung auf ein bestimmtes Maß zu begrenzen.

Ferner ist eine Kombination aus beiden Konzepten möglich.

Bei den in den Figuren 1a und 1b gezeigten Radarfüllstandmessgeräten 100, existiert in der Hornantenne 102 ein Hohlraum, der nicht mit der Vergussmasse 302 vergossen werden darf. Hochfrequenzsignale, die durch die Hornantenne 102 geleitet werden, würden durch die Vergussmasse 302 zu stark bedämpft, was sich negativ auf die Messperformance des Radarfüllstandmessgeräts 100 auswirken würde. Ebenfalls würde die Linse 103 in der Hornantenne 102 nicht mehr funktionieren, da diese darauf ausgelegt ist, dass sie von Luft umgeben ist.

Aus diesem Grund wird die Beschaltung der HF-Einheit 105, die sich unmittelbar am Eingang der Hornantenne 102 und damit in einem unvergessenen Bereich befindet, so ausgelegt, dass deren Leistung begrenzt wird und sich die HF-Einheit 105 nur bis zu einem bestimmten Grad erwärmt.

An den aus dem Stand der Technik bekannten Radarmessgeräten wird es als nachteilig empfunden, dass diese um zulassungsrechtlich vertrieben werden zu dürfen und um zufriedenstellende Messergebnisse zu liefern, einen komplexen Aufbau mit einer Hornantenne und dadurch bedingt eine vergleichsweise aufwändige Fertigung und viele unterschiedliche Bauteile benötigen.

Im V-Band werden aus zulassungsrechtlicher Sicht weitaus weniger Anforderungen an die Antennencharakteristik gestellt. Dieses Frequenzband unterscheidet sich von den anderen oben genannten Bändern dahingehend, dass auch andere, Nicht-Füllstandgeräte, zugelassen werden können. Beispielsweise radarbasierte Bewegungsmelder, Geräte, die über Gestenerkennung bedienbar sind oder Abstandsmesser im Bereich der Consumer-Elektronik. Diese Geräte fallen unter den Begriff Short Range Devices SRD.

Im V-Band sind daher zunehmend hoch integrierte Radar-Chips für den Bereich der Consumer-Elektronik verfügbar. Da diese Radar-Chips damit zunehmend kostengünstiger werden, besteht der Wunsch, diese Radar-Chips auch für Radarmessgeräte und im Speziellen für Radarfüllstandmessgeräte einzusetzen.

Aufgrund der geringeren Anforderungen an die Abstrahlcharakteristik der Antennen im V-Band, werden in diesem Frequenzbereich auch Antennen eingesetzt, die in den anderen Frequenzbändern die zulässigen Abstrahleigenschaften nicht eingehalten hätten. Als Beispiele hierfür können Planarantennen, das sind insbesondere Patchantennen und Patcharrayantennen, benannt werden. Diese Antennen bieten besondere Vorteile, da sie eine besonders flache Bauform aufweisen und damit in ein "System on a Chip" also ein auf einem einzigen Träger integriertes Radarsystem mit integriert werden können.

Patchantennen bestehen aus auf einem dielektrischen isolierenden Substrat angeordneten Metallflächen (Patch) die unterschiedliche Formen aufweisen können. Patcharrayantennen bestehen aus einer Vielzahl von Patchantennen, die in bestimmten Abständen zueinander angeordnet und verschaltet sind. Durch eine geeignete Anordnung und Ansteuerung der Patchelemente können Patcharrayantennen im Vergleich zu Patchantennen eine höhere Richtwirkung aufweisen. In einer besonderen Ansteuerung werden Patcharrayantennen auch als Phased Array Antennen bezeichnet. Bei diesen Antennen ist es möglich, durch eine phasenverschobene Ansteuerung der einzelnen Patchelemente die Antennencharakteristik der Antenne und damit insbesondere deren Hauptabstrahlrichtung zu verändern.

Nachteilig an beiden Antennentypen sind unter anderem die schlechte Nebenkeulenunterdrückung, und die weiterhin unzureichende Richtwirkung.

Hier setzt die vorliegende Erfindung an.

Es ist die Aufgabe der vorliegenden Erfindung ein Radarmessgerät mit einer freistrahlenden Planarantenne zur Verfügung zu stellen.

Diese Aufgabe wird durch ein Radargerät mit den Merkmalen des Patentanspruchs 1 gelöst.

Vorteilhafte Ausgestaltungen und Varianten der Erfindung ergeben sich aus den Unteransprüchen und der nachfolgenden Beschreibung. Die in den Unteransprüchen einzeln aufgeführten Merkmale können sowohl in beliebiger, technisch sinnvoller Weise miteinander als auch mit den in der nachfolgenden Beschreibung näher erläuterten Merkmalen kombiniert werden und andere vorteilhafte Ausführungsvarianten der Erfindung darstellen.

Ein erfindungsgemäßes Radarmessgerät mit einem mit einer Vergussmasse wenigstens teilweise gefüllten Gehäuse, einer in dem Gehäuse angeordneten freistrahlenden Planarantenne, wenigsten einem Sender und wenigstens einem Empfänger, die mit der Planarantenne verbunden sind und einer in einer Hauptabstrahlrichtung der Planarantenne angeordneten Linse mit für von der Planarantenne abgestrahlte Strahlung, zeichnet sich dadurch aus, dass in dem Gehäuse eine Abtrennvorrichtung angeordnet ist, die derart ausgebildet und angeordnet ist, dass ein Eindringen der Vergussmasse in einen Bereich innerhalb der Abtrennvorrichtung und zwischen die Antenne und die Linse verhindert wird.

Durch eine derartige Abtrennvorrichtung wird erreicht, dass das Innere des Gehäuses mit einer Vergussmasse ausgefüllt werden und gleichzeitig eine dielektrische Linse zur Fokussierung der abgestrahlten elektromagnetischen Wellen verwendet werden kann. Der für die Eigenschaften der Planarantenne ausschlaggebende Bereich zwischen den Abstrahlelementen und der Linse bleibt dadurch frei von Vergussmasse, sodass die Antenneneigenschaften in diesem Bereich keinen unvorhersehbaren Schwankungen, bspw. durch einzelne Bereiche mit Vergussmasse unterliegen.

Unter einer freistrahlenden Planarantenne sollen vorliegend Planarantennen, also insbesondere Patchantennen und Patcharrayantennen verstanden werden, die frei in Luft abstrahlen, also insbesondere nicht in einen Hohlleiter oder einen dielektrischen Leiter einkoppeln. Die von den Patchelementen abgestrahlte elektromagnetische Strahlung tritt also unmittelbar in Luft über.

In einer besonders einfachen und kostengünstigen Variante kann die Abtrennvorrichtung aus einem Kunststoff ausgebildet sein. Durch eine Ausgestaltung der Abtrennvorrichtung aus einem Kunststoff kann diese einfach und kostengünstig hergestellt werden. Außerdem ist eine einfache Anpassung der Abtrennvorrichtung an verschiede dimensionierte Radarmessgeräte möglich. Die Abtrennvorrichtung kann dazu bspw. aus einem thermoplastischen Kunststoff hergestellt sein. Die Herstellung kann in diesem Fall besonders einfach durch ein Spritzgussverfahren oder Extrudieren erfolgen.

Es ist vorteilhaft, wenn die Abtrennvorrichtung rückseitig, die Antenne radial umgebend ausgebildet ist.

Begriffe wie "rückseitig" und "vorderseitig" sollen in der vorliegenden Anmeldung immer in Bezug auf die Hauptabstrahlrichtung der verwendeten Planarantenne verstanden werden. Rückseitig ist damit in Beug auf die Abtrennvorrichtung der Teil der Abtrennvorrichtung, der zu dem abstrahlenden Radarchip bzw. der Antenne hin orientiert ist. Vorderseitig ist der Teil der Abtrennvorrichtung, der vom Radarchip weg bzw. zu der Linse hin orientiert ist.

Die Abtrennvorrichtung ist damit vorteilhafterweise derart ausgebildet, dass sie die Antenne radial umgibt und vorzugsweise vollständig umschließt. Unter radial umgebend soll damit auch eine Situation verstanden werden, in der die Abtrennvorrichtung bspw. durch einen auf dem Substrat angeordneten Abstandhalter oder eine Dichtung von dem Substrat in Hauptabstrahlrichtung beanstandet angeordnet ist. Ausschlaggebend ist, dass die Abtrennvorrichtung an ihrem zur Antenne orientierten Ende der Antenne eine lichte Weite aufweist, die mit einer Fläche der Antenne nicht überlappt.

In einer vorteilhaften Weiterbildung ist die Abtrennvorrichtung derart ausgestaltet, dass sie vorderseitig die Linse radial umgebend ausgebildet ist. Auf diese Weise wird erreicht, dass die Linsenfläche maximal ausgenutzt werden kann.

Vorteilhafterweise erstreckt sich die Abtrennvorrichtung linear.

Insbesondere kann die Abtrennvorrichtung in Hauptabstrahlrichtung konisch erweiternd ausgebildet sein. Auf diese Weise wird es ermöglicht, dass im Vergleich zu einer Fläche der Antenne eine Linse mit einer größeren, sich senkrecht zur Hauptabstrahlrichtung erstreckenden Fläche eingesetzt werden kann, während gleichzeitig ein möglichst großer Teil des Gehäuses mit der Vergussmasse gefüllt sein kann.

Um ein Eindringen der Vergussmasse in den Bereich zwischen Antenne und Linse, also in den Innenraum der Abtrennvorrichtung zu verhindern, kann es sinnvoll sein, wenn die Abtrennvorrichtung in Hauptabstrahlvorrichtung eine vorderseitige und/oder eine rückseitige Dichtvorrichtung aufweist.

Insbesondere die vorderseitige Dichtvorrichtung kann dabei radial zu der Abtrennvorrichtung angeordnet sein. Auf diese Weise kann erreicht werden, dass die Dichtvorrichtung gegen einen radial zu der Abtrennvorrichtung angeordneten Teil des Gehäuses abdichtet. Dies kann bspw. sinnvoll sein, wenn die Linse einstückig mit dem Gehäuse ausgebildet ist. Dann kann erreicht werden, dass die Abtrennvorrichtung innerhalb einer umlaufenden Stufe des Gehäuses angeordnet und mittels der Dichtvorrichtung dort verklemmt wird. Auf diese Weise kann ein Verrutschen der Abtrennvorrichtung in dem Gehäuse verhindert werden.

Ferner kann es vorteilhaft sein, wenn die rückseitige Dichtvorrichtung axial zu der Abtrennvorrichtung, insbesondere zwischen der Abtrennvorrichtung und dem Substrat der Antenne angeordnet ist. In dieser Ausgestaltung kann die Dichtvorrichtung gegen eine Fläche des Substrats abdichten, sodass keine zusätzliche Dichtfläche vorgesehen werden muss.

Eine besonders einfache und kostengünstige Abdichtung kann erreicht werden, wenn die vorderseitige Dichtvorrichtung und/oder die rückseitige Dichtvorrichtung in einer Nut der Abtrennvorrichtung angeordnet und vorzugsweise als O-Ring ausgebildet ist. Durch eine Anordnung in einer Nut kann die Dichtvorrichtung für eine Montage einfach platziert und gehaltert werden. Durch eine Ausgestaltung als O-Ring können gut verfügbare und erprobte Standardbauteile verwendet werden.

In einer Varianten kann die Abtrennvorrichtung einstückig mit dem Gehäuse ausgebildet sein. Durch eine derartige Ausgestaltung wird eine Anordnung geschaffen, in der die Abtrennvorrichtung relativ zu dem Gehäuse fixiert ist. Dadurch kann bspw. eine falsche Ausrichtung der Abtrennvorrichtung und eine Abdichtung an einem Übergang von der Abtrennvorrichtung zu dem Gehäuse vermieden werden. Es wird dadurch die Anzahl der notwendigen Bauelemente deutlich reduziert und so eine Montage des Radarmessgeräts vereinfacht.

In einer Ausgestaltung können sowohl die Abtrennvorrichtung als auch die Linse einstückig mit dem Gehäuse ausgebildet sein.

Um an einem Übergang von der Abtrennvorrichtung zu dem Träger der Antenne keine Dichtung zu benötigen, kann die Abtrennvorrichtung mit dem Träger stoffschlüssig verbunden, insbesondere verklebt oder verschweißt sein. Eine Schweißverbindung kann bspw. durch Kunststoffschweißen, insbesondere mit einem Laser hergestellt sein.

Die Abtrennvorrichtung kann ferner aus einem elektrisch leitfähigen Kunststoff gefertigt sein. Durch eine derartige Ausgestaltung wird erreicht, dass unerwünschte Nebenkeulen der Antennencharakteristik, das sind vorliegende insbesondere Nebenkeulen, die nicht in Richtung der Linse orientiert sind und daher von dieser nicht gebündelt werden würden, durch die Abtrennvorrichtung unterdrückt werden. Ferner wird durch eine Abtrennvorrichtung aus leitfähigem Kunststoff die Einstrahlung von elektronmagnetischen Feldern aus anderen Richtungen als aus der Hauptabstrahlrichtung der Antenne gedämpft, sodass auch der Empfang der Antenne verbessert wird.

Die Linse kann bspw. als plan-konvexe Linse oder als Fresnel-Linse ausgebildet sein. Eine plan-konvexe Linse hat den Vorteil, dass diese mit ihrer planen Seite nach außen, d. h. zum Prozess hin orientiert, eingebaut werden kann. Das Radarmessgerät kann damit mit einer weitestgehend planen Oberfläche gefertigt werden.

Durch eine Ausgestaltung der Linse als Fresnel-Linse kann eine deutliche Materialersparnis gegenüber herkömmlichen Linsen erreicht werden. Durch eine reduzierte Materialdicke wird außerdem eine reduzierte Lunkerbildung, d. h. eine reduzierte Bildung von Lufteinschlüssen im Material der Linse erreicht. Insgesamt können damit Materialkosten und der Fertigungsaufwand für die Linse reduziert werden. Zusätzlich kann durch die verringerte Dicke der Fresnel-Linse eine Bauhöhe des Radarmessgeräts weiter reduziert werden.

Die vorliegende Erfindung wird nachfolgend anhand von Ausführungsbeispielen unter Bezugnahme auf die beigefügten Figuren eingehend erläutert. Es zeigen:
- Figur 1: in den Teilfiguren 1a und 1b jeweils ein Ausführungsbeispiel eines Radarfüllstandmessgeräts mit einer Hornantenne gemäß dem Stand der Technik (schon behandelt),
- Figur 2: in den Teilfiguren 2a bis 2c, Ausführungsbeispiele von Planarantennen und integrierten Radarchips, wie sie in der Consumer-Elektronik eingesetzt werden,
- Figur 3: ein erstes Ausführungsbeispiel eines Radarmessgeräts gemäß der vorliegenden Anmeldung mit einer konisch ausgebildeten Abtrennvorrichtung,
- Figur 4: ein zweites Ausführungsbeispiel eines Radarmessgeräts gemäß der vorliegenden Anmeldung mit einer integral mit dem Gehäuse ausgebildeten Abtrennvorrichtung, und
- Figur 5: ein drittes Ausführungsbeispiel eines Radarmessgeräts gemäß der vorliegenden Anmeldung mit einer konisch ausgebildeten Abtrennvorrichtung und einer Fresnel-Linse,

In den Figuren bezeichnen - soweit nicht anders angegeben - gleiche Bezugszeichen gleiche oder einander entsprechende Komponenten mit gleicher Funktion.

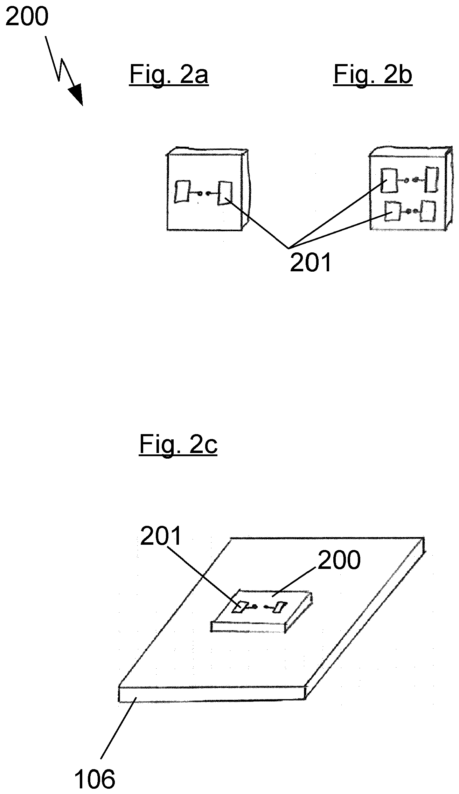

Figur 2 zeigt in den Teilfiguren 2a bis 2c neuartige Radarchips 200, wie sie für Anwendungen in der Consumer-Elektronik im SDR Band von großen Halbleiterherstellern verfügbar sind. Diese Radarchips 200 sind so ausgestaltet, dass in den Radarchips bereits ein (Figur 2a, 2c) oder mehrere (Figur 2b) abstrahlende, als Patchantennen 201 ausgebildete Patchelemente integriert sind. Ferner ist eine Mehrzahl weiterer Schaltungskomponenten im Radarchip 200 integriert. Auf derartigen Radarchips können komplette Radarsysteme enthalten sein, die sämtliche Schaltungselemente von einer Erzeugung von Hochfrequenzsignalgen bis hin zu einer Digitalisierung von Empfangssignalen aufweisen.

Die Radarchips 200 haben dabei eine Gehäuseform, die es erlaubt, die Chips automatisiert auf eine Leiterplatte 106 aufzulöten. Häufig sind diese Gehäuse als oberflächenmontiertes Bauteil (engl. Surface-mounted device, SMD), in der Bauform mit den Bezeichnungen BGA (Ball Grid Array), LGA (Land Grid Array) oder QFN (Quad Flat No Leads Package) ausgeführt.

Eine Kontaktfläche des Radarchips 200, die mit der Leiterplatte 106 verlötet wird, befindet sich auf der gegenüberliegenden Seite der sich in den Chip integrierten Patchantennen 201. Die Radarchips 200 und die darauf integrierten Patchantennen 201 sind so ausgelegt, dass die Antenne in den freien Raum, also ein Vakuum oder einen mit Luft gefüllten Raum abstrahlt.

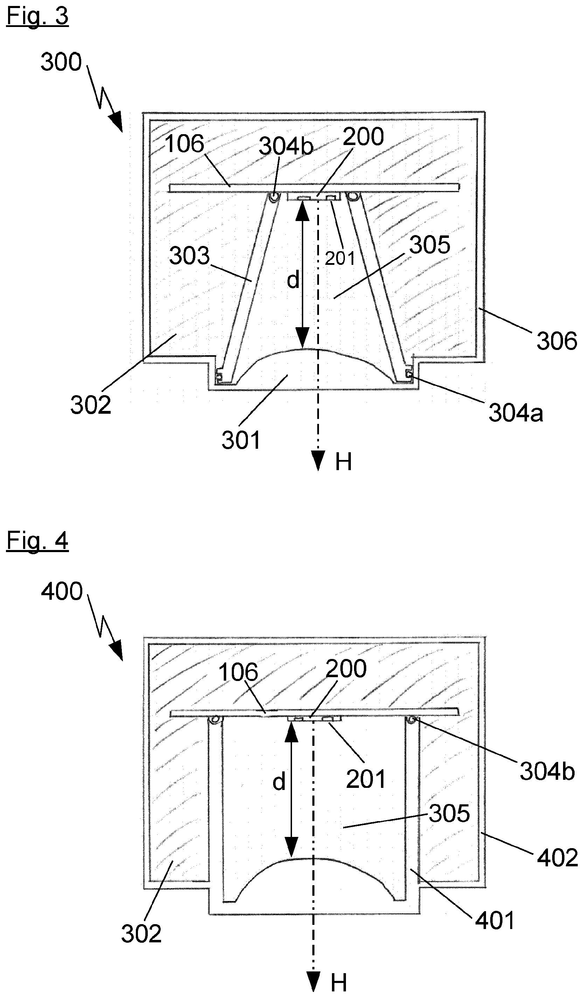

Figur 3 zeigt ein erstes Ausführungsbeispiel eines Radarmessgeräts 300 gemäß der vorliegenden Anmeldung.

Das Radarmessgerät 300 weist ein Gehäuse 306 auf, in dem ein Leiterplatte 106 mit einem darauf angeordneten Radarchip 200 angeordnet ist. Eine Befestigung der Leiterplatte in dem Gehäuse 306 ist nicht näher dargestellt, kann aber durch üblich Mittel, bspw. Einschubschienen, Verrastungen oder Verschraubungen erfolgen.

Für eine Verwendung der Radarchips 200 aus der Consumer-Elektronik in der Füllstandmessung haben die integrierten Patchantennen 201 häufig eine zu geringe Richtwirkung um gute Messergebnisse zu erzielen. Insbesondere durch die geringe Fokussierung der Hauptkeule der Antennencharakteristik sowie die für Patchantennen typischen Nebenkeulen wird ein erzieltes Messergebnis zu unspezifisch.

Diese für die Füllstandmessung unzureichende Antennencharakteristik kann durch eine dielektrische Linse 301, wie sie in dem in Figur 3 gezeigten Ausführungsbeispiel in Hauptabstrahlrichtung H der auf dem Radarchip 200 angeordneten Patchantenne 201 angeordnet ist, verbessert werden. Die Linse 301 bündelt die in Form von elektromagnetischer Strahlung abgestrahlte Hochfrequenzenergie und verbessert so die Richtwirkung der Patchantenne 201. Hierfür ist die dielektrische Linse 301 in einem bestimmten Abstand d zur Patchantenne 201 angeordnet, sodass sich diese im Brennpunkt der Linse 301 befindet. Dieser Abstand d lässt sich mit modernen Feldsimulationsprogrammen genau bestimmen.

Im Gegensatz zu Hornantennen 102 mit Linsen lässt sich so zwar eine schlechtere Nebenkeulenunterdrückung, aber eine ähnlich gute Richtwirkung erreichen.

In dem in Figur 3 gezeigten Ausführungsbeispiel ist die Linse 301 als integraler Bestandteil des Gehäuses 306 ausgebildet und aus dem gleichen Kunststoff wie das Gehäuse 306 gefertigt. Hierfür können das Gehäuse 306 und die Linse 301 gemeinsam durch ein Spritzgussverfahren hergestellt werden. Die Linse 301 kann aber auch teilweise aus einem anderen Kunststoff bestehen und als separates Bauteil in das Gehäuse 306 eingesetzt oder in einem Zweikomponenten-Spritzgussverfahren mit dem Gehäuse 306 umspritzt werden. Eine Verbindung der Linse 301 mit dem Gehäuse 306 durch ein Zweikomponenten-Spritzgussverfahren hat den Vorteil, dass auf diese Weise ohne zusätzliche Abdichtungen durch eine stoffschlüssige Verbindung zwischen der Linse 301 und dem Gehäuse 306 eine hermetische Verbindung erreicht werden kann.

Eine Geometrie der Linse 301 ist abhängig von deren Material und dem Abstand d der Patchantenne 201. Die Linse 301 kann dabei - abhängig von den vorgenannten Faktoren und abhängig von sonstigen Anforderungen der Messaufgabe - bikonvex oder plankonvex ausgeführt sein. Auch konkave Bauformen sind denkbar.

Um einen Einsatz in explosionsgefährdeten Umgebungen zu ermöglichen, ist es notwendig, das Radarmessgerät 300 Ex-geschützt auszuführen. Wie oben beschrieben kann dies durch verschiedene Maßnahmen, insbesondere die Reduzierung der abgestrahlten Leistung sowie die weitestgehende Eliminierung von Hohlräumen innerhalb des Gehäuses 306 erreicht werden.

Um ein Eindringen einer zur Reduzierung von Hohlräumen in dem Gehäuse 306 verwendeten Vergussmasse 302 in einen Bereich zwischen der Patchantenne 201 und der Linse 301 zu verhindern, ist in dem in Figur 3 gezeigten Ausführungsbeispiel eine Abtrennvorrichtung 303 vorgesehen. Würde man ein Radarmessgerät 300 mit einer freistrahlenden Patchantenne 201 und einer im Gehäuse 306 integrierten Linse ohne zusätzliche Maßnahmen mit der Vergussmasse 302 vergießen, so würde die Vergussmasse 302 zwischen die Linse 301 und die Patchantenne 201 laufen und die abgestrahlte HF-Leistung stark bedämpfen. Ein solches Radarmessgerät 300 wäre in seiner Messperformance stark eingeschränkt.

Die Abtrennvorrichtung 303 ist in dem vorliegenden Ausführungsbeispiel als separates Bauteil ausgeführt, das sich konisch erweiternd von der Leiterplatte 106 zu der Linse 301 erstreckt. Die Abtrennvorrichtung 303 besteht aus einem Kunststoff und ist in dem in Figur 3 gezeigten Ausführungsbeispiel zwischen der Platine 106 und der Linse 301 angeordnet. Rückseitig weist die Abtrennvorrichtung 303 eine Dichtung 304b auf, die vorliegend als O-Ring ausgebildet ist. Der O-Ring ist in einer stirnseitigen Nut der Abtrennvorrichtung 303 angeordnet und liegt an der Leiterplatte 106 derart an, dass ein Übergang zwischen der Leiterplatte 106 und der Abtrennvorrichtung 303 gegen ein Eindringen der Vergussmasse 302 abgedichtet ist.

Vorderseitig ist ebenfalls eine als O-Ring ausgebildete Dichtung 304a in einer umlaufenden Nut der Abtrennvorrichtung 303 angeordnet. Die vorderseitige Nut ist in Radialrichtung ausgebildet und verläuft außenseitig an der Abtrennvorrichtung 303. Die vorderseitige Dichtung 304a ist damit ebenfalls in Radialrichtung zu der Abtrennvorrichtung 303 angeordnet und sitzt zwischen der Abtrennvorrichtung 303 und einem Wandungsabschnitt des Gehäuses 306. Im vorliegenden Ausführungsbeispiel ist ein Übergang von dem Gehäuse 306 zu der Linse 301 mit einer nach vorne springenden Stufe ausgebildet, sodass die Abtrennvorrichtung innerhalb dieser umlaufend um die Linse 301 ausgebildeten Stufe sitzt.

Die Abtrennvorrichtung dichtet damit den Raum zwischen Linse 301 und dem Radarchip 200, insbesondere der Patchantenne 201, sowohl vorderseitig als auch rückseitig ab.

Um einen Betrieb in explosionsgefährdeten Bereichen sicherzustellen ist sicherzustellen, dass die Beschaltung der HF-Einheit 105, die in dem vorliegenden Ausführungsbeispiel durch den Radarchip 200 ausgeführt ist, so ausgelegt ist, dass die zugeführte Leistung in jedem Fall derart begrenzt ist, dass sich ein potentiell zündbares Gasgemisch in diesem Hohlraum nicht entzünden kann. Aus diesem Grund ist es sinnvoll, wenn die Abtrennvorrichtung 303 in Richtung Platine 106 ausschließlich die absolut notwendigen Bereiche und Bauteile umschließt, da diese wie bereits erwähnt leistungs- und temperaturmäßig begrenzt werden müssen. Die Abtrennvorrichtung 303 ist damit idealerweise so ausgestaltet, dass eine rückseitige umschlossene Fläche minimal ist. Vorderseitig ist die Abtrennvorrichtung 303 umlaufend um die Linse, die im Verhältnis größer ist als die HF-Einheit 105.

Ferner ist aus mechanischer Sicht darauf zu achten, dass die Übergänge zwischen Abtrennvorrichtung 303 und Leiterplatte 106 bzw. Gehäuse 306 gegenüber der Vergussmasse 302 sauber abgedichtet sind. Dies kann über die als O-Ringe ausgebildeten Dichtungen 304a, 304b realisiert werden. Alternativ können auch andere Dichtungen 304a, 304b vorgesehen sein, die bspw. unmittelbar an die Abtrennvorrichtung 303 angespritzt sein können. Die Leiterplatte 106 weist zur Abdichtung eine Dichtfläche auf, sodass die Abtrennvorrichtung 303 dicht anliegen kann. Hierfür sind in diesem Bereich keine elektronischen Bauelemente platziert. Es sei an dieser Stelle angemerkt, dass weitere elektronische Bauelemente neben dem Radarchip, bspw. für eine Ansteuerung des Radarchips 200 oder eine nachgelagerte Signalverarbeitung in den Figuren nicht dargestellt, gleichwohl aber dennoch vorhanden sind.

Die vorliegende Abtrennvorrichtung 303 unterscheidet sich von einer Hornantenne 102, wie sie aus dem Stand der Technik bekannt ist, dahingehend, dass diese komplett aus Kunststoff bestehen kann. Eine Hornantenne 102 hingegen benötigt mindestens eine metallisch leitfähige Schicht. Ein weiterer Unterschied liegt in der Signalzuführung. Bei einer Hornantenne 102 muss das Hochfrequenzsignal auf eine bestimmte Art und Weise eingespeist werden. Üblicherweise geschieht dies über einen metallischen oder metallisierten Hohlleiter 104, in dem das von der Schaltung erzeugte Hochfrequenzsignal angeregt wird. Mit diesen vorliegend verwendeten Radarchips 200 mit integrierter Patchantennen 201, ist eine solche Signalzuführung aber nicht zu realisieren, da hierfür eine direkte elektrische Verbindung zwischen Antennenhorn 102 und einer Groundfläche des Patchelements bestehen müsste. Bei den verwendeten Radarchips 200 ist dies nicht vorgesehen.

In einer in Figur 4 dargestellten, alternativen Ausgestaltungsform ist die Abtrennvorrichtung 401 als integraler Bestandteil des Gehäuses 402 ausgebildet. In dieser Ausgestaltung entfällt damit die Trennstelle zwischen Gehäuse 402 und Abtrennvorrichtung 401, und die vorderseitige Dichtung 304a kann eingespart werden.

In einer ersten Variante ist die Abtrennvorrichtung 303 für Hochfrequenzsignale transparent, sodass ihr aus hochfrequenztechnischer Sicht keine Funktionalität zukommt.

In einer alternativen Variante ist die Abtrennvorrichtung 303 aus einem leitfähigen Kunststoff ausgebildet. Dieser hat neben der eigentlichen Funktion, einen vergussmassefreien Raum 305 zwischen Radarchip 200 und Linse 301 herzustellen, die Aufgabe, unerwünschte Nebenkeulen zu reduzieren. Zwar sind diese aus zulassungstechnischer Sicht eher unkritisch, jedoch können diese im Radarsignal Störungen erzeugen, die die Messsicherheit verschlechtern. Durch den leitfähigen Kunststoff wird die in Richtung der Abtrennvorrichtung 303 abgestrahlte HF-Energie in Wärme umgewandelt und die Nebenkeulen werden damit bedämpft. Auf diese Weise wird auch die Energie von Reflexionen, die nicht von der Hauptkeule stammen reduziert, sodass diese weniger Einfluss auf das Empfangssignal haben.

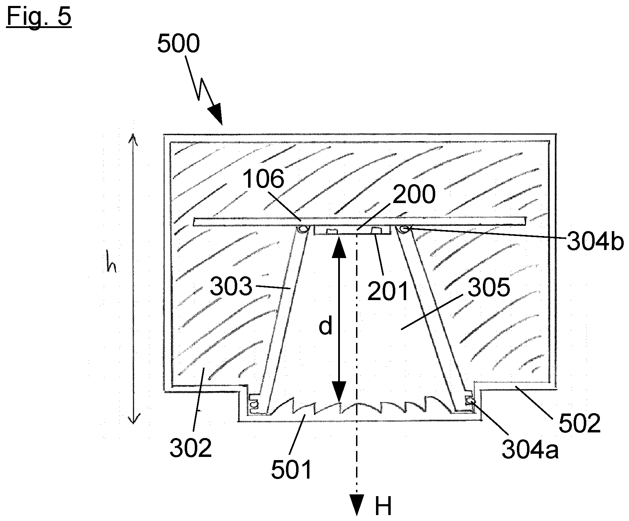

In einer weiteren Ausführungsform, wie sie in Figur 5 dargestellt ist, ist die Linse 301 nicht als bi- oder plankonvexe Linse, sondern als dem Fachmann bekannten Fresnelsche Stufenlinse 501 oder auch Fresnel-Linse 501 ausgeführt. Da die Brechung der Wellenfronten nur an den Übergängen von Luft zu Linsenmaterial stattfindet, ist der Kerngedanke der Fresnel-Linse, dass das Innere der Linse segmentartig aufgeteilt und entfernt werden kann, da es theoretisch zur Funktionalität der Linse keinen Beitrag leistet.

Vorteilhaft an dieser Bauform ist unter anderem das reduzierte Volumen der Linse. Diese lässt sich somit leichter in einem Kunststoffspritzgießverfahren herstellen. Problematisch bei voluminösen, massiven Kunststoffspritzteilen ist die Lunkerbildung. Die beim Erkalten der gegossenen Masse entstehenden Hohlräume, die auch als Lunker bezeichnet werden, haben großen negativen Einfluss auf die hochfrequenztechnische Funktionalität der Linse. An den im Material befindlichen Hohlräumen werden die Hochfrequenzsignale ungleichmäßig gebrochen, was zu einer Defokussierung und somit zu Performanceverlusten führt. Das Risiko der Lunkerbildung ist umso größer, je größer das Verhältnis von Volumen zu Oberfläche des zu spritzgießenden Objekts ist. Dieses Risiko ist bei einer Fresnel-Linse deutlich reduziert, da das Verhältnis von Volumen zu Oberfläche im Vergleich zu einer gewöhnlichen konvexen Linse 301 deutlich reduziert ist.

Ein weiterer Vorteil einer Fresnel-Linse ist, dass das Gerätegehäuse 502 insgesamt flacher ausgeführt werden kann. Die Höhe des Gehäuses 502 ist unter anderem durch die Dicke der Linse und den Abstand d von Linse und Radarchip 200 definiert. Die reduzierte Bauhöhe der Fresnel-Linse 501 im Vergleich zur konvexen Linse hat deshalb maßgeblich Einfluss auf die Bauhöhe h des Gesamtgeräts. Kompakte Bauformen haben sich in der Praxis als vorteilhaft erwiesen. Ein weiterer Vorteil sind reduzierte Materialkosten.

Die vorliegende Erfindung bezieht sich nicht nur auf Radarfüllstandmessgeräte, die im V-Band arbeiten, sondern kann auch auf andere Radarmessgeräte im V-Band übertragen werden. Es gibt darüber hinaus noch weitere Frequenzbänder, die eine solche Technik erlauben, beispielsweise im Bereich um 122 GHz.

### Bezugszeichenliste

- 100, 300: Radarmessgerät
- 101, 306, 402: Gehäuse
- 102: Hornantennen
- 103, 301: Linse
- 104: Hohlleiter
- 105: Hochfrequenzeinheit
- 106: Leiterplatte, Platine

- 200: Radarchip
- 201: Patchantenne

- 302: Vergussmasse
- 303, 401: Abtrennvorrichtung
- 304a: Dichtung
- 304b: Dichtung
- 305: vergussmassefreier Raum

- 501: Stufenlinse, Fresnel-Linse
- 502: Gerätegehäuse

- d: Abstand
- h: Bauhöhe
- H: Hauptabstrahlrichtung

## Patentansprüche

1. Radarmessgerät (100, 300) mit einem mit einer Vergussmasse (302) wenigstens teilweise gefüllten Gehäuse (101, 306, 402), eine in dem Gehäuse (101, 306, 402) angeordnete freistrahlende Planarantenne, wenigsten einem Sender und wenigstens einem Empfänger, die mit der Planarantenne verbunden sind und einer in einer Hauptabstrahlrichtung H der Planarantenne angeordneten Linse (103, 301) mit für von der Planarantenne abgestrahlte Strahlung,
**dadurch gekennzeichnet, dass**
in dem Gehäuse (101, 306, 402) eine Abtrennvorrichtung (303, 401) angeordnet ist, die derart ausgebildet und angeordnet ist, dass ein Eindringen der Vergussmasse (302) in einen Bereich innerhalb der Abtrennvorrichtung (303, 401) und zwischen die Antenne und die Linse (103, 301) verhindert wird.

2. Radarmessgerät (100, 300) gemäß Anspruch 1,
**dadurch gekennzeichnet, dass**
die Abtrennvorrichtung (303, 401) aus einem Kunststoff ausgebildet ist.

3. Radarmessgerät (100, 300) gemäß einem der vorhergehenden Ansprüche, **dadurch gekennzeichnet, dass**
die Abtrennvorrichtung (303, 401) rückseitig die Planarantenne radial umgebend ausgebildet ist.

4. Radarmessgerät (100, 300) gemäß einem der vorhergehenden Ansprüche, **dadurch gekennzeichnet, dass**
die Abtrennvorrichtung (303, 401) vorderseitig die Linse (103, 301) radial umgebend ausgebildet ist.

5. Radarmessgerät (100, 300) gemäß einem der vorhergehenden Ansprüche, **dadurch gekennzeichnet, dass**
die Abtrennvorrichtung (303, 401) in Hauptabstrahlrichtung H konisch erweiternd ausgebildet ist.

6. Radarmessgerät (100, 300) gemäß einem der vorhergehenden Ansprüche, **dadurch gekennzeichnet, dass**
die Abtrennvorrichtung (303, 401) in Hauptabstrahlvorrichtung eine vorderseitige und/oder eine rückseitige Dichtvorrichtung aufweist.

7. Radarmessgerät (100, 300) gemäß Anspruch 6,
**dadurch gekennzeichnet, dass**
die vorderseitige Dichtvorrichtung radial zu der Abtrennvorrichtung (303, 401) angeordnet ist.

8. Radarmessgerät (100, 300) gemäß Anspruch 6 oder 7,
**dadurch gekennzeichnet, dass**
die rückseitige Dichtvorrichtung axial zu der Abtrennvorrichtung (303, 401), insbesondere zwischen der Abtrennvorrichtung (303, 401) und einem Träger für die Antenne angeordnet ist.

9. Radarmessgerät (100, 300) gemäß einem der Ansprüche 6 bis 8,
**dadurch gekennzeichnet, dass**
die vorderseitige Dichtvorrichtung und/oder die rückseitige Dichtvorrichtung in einer Nut der Abtrennvorrichtung (303, 401) angeordnet und vorzugsweise als O-Ring ausgebildet ist.

10. Radarmessgerät (100, 300) gemäß einem der Ansprüche 1 bis 5,
**dadurch gekennzeichnet, dass**
die Abtrennvorrichtung (303, 401) einstückig mit dem Gehäuse (101, 306, 402) ausgebildet ist.

11. Radarmessgerät (100, 300) gemäß einem der vorhergehenden Ansprüche,
**dadurch gekennzeichnet, dass**
die Abtrennvorrichtung (303, 401) mit einem Träger für die Antenne dichtend verbunden, insbesondere verklebt ist.

12. Radarmessgerät (100, 300) gemäß einem der vorhergehenden Ansprüche,
**dadurch gekennzeichnet, dass**
die Abtrennvorrichtung (303, 401) aus einem elektrisch leitfähigen Kunststoff gefertigt ist.

13. Radarmessgerät (100, 300) gemäß einem der vorhergehenden Ansprüche,
**dadurch gekennzeichnet, dass**
die Linse (103, 301) als plan-konvexe Linse oder als Fresnel-Linse (501) ausgebildet ist.

## Claims

1. Radar measuring device (100, 300) with a housing (101, 306, 402) at least partially filled with a potting compound (302), a general-diffuse planar antenna arranged in the housing (101, 306, 402), at least one transmitter and at least one receiver that are connected to the planar antenna, and a lens (103, 301) arranged in a main emission direction H of the planar antenna [for] radiation emitted from the planar antenna,
**characterized in that**
a separating apparatus (303, 401) is arranged in the housing (101, 306, 402) and is designed and arranged in such a way that a penetration of the potting compound (302) into an area within the separating apparatus (303, 401) and between the antenna and the lens (103, 301) is prevented.

2. Radar measuring device (100, 300) according to Claim 1,
**characterized in that**
the separating apparatus (303, 401) is made from a plastic.

3. Radar measuring device (100, 300) according to any of the preceding claims,
**characterized in that**
the separating apparatus (303, 401) is designed to radially surround the planar antenna at the rear.

4. Radar measuring device (100, 300) according to any of the preceding claims,
**characterized in that**
the separating apparatus (303, 401) is designed to radially surround the lens (103, 301) at the front.

5. Radar measuring device (100, 300) according to any of the preceding claims,
**characterized in that**
the separating apparatus (303, 401) is designed to widen conically in the main emission direction H.

6. Radar measuring device (100, 300) according to any of the preceding claims,
**characterized in that**
the separating apparatus (303, 401) has a front and/or a rear sealing apparatus in the main emission [direction].

7. Radar measuring device (100, 300) according to Claim 6,
**characterized in that**
the front sealing apparatus is arranged radially to the separating apparatus (303, 401).

8. Radar measuring device (100, 300) according to Claim 6 or 7, **characterized in that**
the rear sealing apparatus is arranged axially to the separating apparatus (303, 401), in particular between the separating apparatus (303, 401) and a carrier for the antenna.

9. Radar measuring device (100, 300) according to any of the Claims 6 to 8, **characterized in that**
the front sealing apparatus and/or the rear sealing apparatus is arranged in a groove of the separating apparatus (303, 401) and is preferably designed as an O-ring.

10. Radar measuring device (100, 300) according to any of the Claims 1 to 5,
**characterized in that**
the separating apparatus (303, 401) is designed integrally with the housing (101, 306, 402).

11. Radar measuring device (100, 300) according to any of the preceding
claims,
**characterized in that**
the separating apparatus (303, 401) is sealingly connected, in particular glued, to a carrier for the antenna.

12. Radar measuring device (100, 300) according to any of the preceding claims,
**characterized in that**
the separating apparatus (303, 401) is made from an electrically conductive plastic.

13. Radar measuring device (100, 300) according to any of the preceding claims,
**characterized in that**
the lens (103, 301) is designed as a plano-convex lens or as a Fresnel lens (501).

## Revendications

1. Appareil de mesure radar (100, 300) avec un boîtier (101, 306, 402) rempli au moins partiellement d'une masse de scellement (302), une antenne planaire à rayonnement libre disposée dans le boîtier (101, 306, 402), au moins un émetteur et au moins un récepteur, raccordés à l'antenne planaire et une lentille (103, 301) disposée dans une direction de rayonnement principale H de l'antenne planaire avec pour le rayonnement rayonné par l'antenne planaire, **caractérisé en ce que**
un dispositif de séparation (303, 401) est disposé dans le boîtier (101, 306, 402), qui est formé et disposé de manière à empêcher une pénétration de la masse de scellement (302) dans une zone à l'intérieur du dispositif de séparation (303, 401) et entre l'antenne et la lentille (103, 301).

2. Appareil de mesure radar (100, 300) selon la revendication 1,
**caractérisé en ce que**
le dispositif de séparation (303, 401) est formé en matière plastique.

3. Appareil de mesure radar (100, 300) selon l'une quelconque des revendications précédentes,
**caractérisé en ce que**
le dispositif de séparation (303, 401) est formé de manière à entourer radialement l'antenne planaire à l'arrière.

4. Appareil de mesure radar (100, 300) selon l'une quelconque des revendications précédentes,
**caractérisé en ce que**
le dispositif de séparation (303, 401) est formé à l'avant de manière à entourer radialement la lentille (103, 301).

5. Appareil de mesure radar (100, 300) selon l'une quelconque des revendications précédentes,
**caractérisé en ce que**
le dispositif de séparation (303, 401) est formé pour s'élargir coniquement dans la direction de rayonnement principale H.

6. Appareil de mesure radar (100, 300) selon l'une quelconque des revendications précédentes,
**caractérisé en ce que**
le dispositif de séparation (303, 401) dans le dispositif de rayonnement principal présente un dispositif d'étanchéité à l'avant et/ou à l'arrière.

7. Appareil de mesure radar (100, 300) selon la revendication 6,
**caractérisé en ce que**
le dispositif d'étanchéité à l'avant est disposé radialement par rapport au dispositif de séparation (303, 401).

8. Appareil de mesure radar (100, 300) selon la revendication 6 ou la revendication 7,
**caractérisé en ce que**
le dispositif d'étanchéité à l'arrière est disposé axialement par rapport au dispositif de séparation (303, 401), en particulier entre le dispositif de séparation (303, 401) et un support pour l'antenne.

9. Appareil de mesure radar (100, 300) selon l'une quelconque des revendications 6 à 8,
**caractérisé en ce que**
le dispositif d'étanchéité à l'avant et/ou le dispositif d'étanchéité à l'arrière est disposé dans une rainure du dispositif de séparation (303, 401) et est de préférence formé en tant que joint torique.

10. Appareil de mesure radar (100, 300) selon l'une quelconque des revendications 1 à 5,
**caractérisé en ce que**
le dispositif de séparation (303, 401) est formé d'un seul tenant avec le boîtier (101, 306, 402).

11. Appareil de mesure radar (100, 300) selon l'une quelconque des revendications précédentes,
**caractérisé en ce que**
le dispositif de séparation (303, 401) est raccordé de manière étanche à un support pour l'antenne, en particulier est collé.

12. Appareil de mesure radar (100, 300) selon l'une quelconque des revendications précédentes,
**caractérisé en ce que**
le dispositif de séparation (303, 401) est fabriqué dans un plastique électriquement conducteur.

13. Appareil de mesure radar (100, 300) selon l'une quelconque des revendications précédentes,
**caractérisé en ce que**
la lentille (103, 301) est formée comme une lentille plan-convexe ou comme une lentille de Fresnel (501).
